# EUROPÄISCHE PATENTSCHRIFT

(11) **EP 1 862 058 B1**
(45) Veröffentlichungstag und Bekanntmachung des Hinweises auf die Patenterteilung: **28.03.2012**
(21) Anmeldenummer: 07108192.1
(22) Anmeldetag: 15.05.2007
(51) Int. Cl.: A01D 43/08

(54) **Maschine zur Ernte stängelartiger Pflanzen mit einem Abstreifer**
Machine for harvesting stalk-like plants with a stripper
Machine de récolte de plantes à tiges avec un démouleur

(30) Priorität: 03.06.2006 DE 102006026070
(43) Veröffentlichungstag der Anmeldung: 05.12.2007
(73) Patentinhaber: Maschinenfabrik Kemper GmbH & Co. KG, 48973 Stadtlohn (DE)
(72) Erfinder: Rickert, Clemens, 48703 Stadtlohn (DE); Schulze Hockenbeck, Leo, 48351 Everswinkel (DE); Weitenberg, Klemens, 46325 Borken (DE); Huening, Martin, 48727 Billerbeck (DE)
(74) Vertreter: Holst, Sönke

(56) Entgegenhaltungen:
- EP-A1- 0 760 200
- US-A1- 2004 123 576

## Beschreibung

Die Erfindung betrifft eine Maschine zur Ernte stängelartiger Pflanzen mit einem Rahmen, zwei am Rahmen abgestützten, übereinander angeordneten Förderelementen mit um ihren Umfang verteilten Aussparungen zur Aufnahme und Förderung eines Pflanzenstängel umfassenden Gutstroms und einem Abstreifer, der sich in den Zwischenraum zwischen den Förderelementen erstreckt, um die Pflanzenstängel aus den Aussparungen heraus zu bewegen, wobei der Abstreifer durch einen außerhalb des von den Förderelementen geförderten Gutstroms angeordneten, sich vertikal erstreckenden, freistehenden Pfosten mit dem Rahmen verbunden ist und eine mit den Förderelementen zusammenwirkende Spitze des Abstreifers bezüglich einer Vorwärtsrichtung der Maschine rückwärtig einer Drehachse der Förderelemente liegt.

### Stand der Technik

In den Druckschriften DE 195 31 918 A und DE 102 58 013 A , die eine Maschine mit allen Kennzeichen aus dem Oberbegriff vom Anspruch 1 offenbaren, werden für die Ernte von stängelartigen Pflanzen, wie Mais, geeignete Maschinen zur Anbringung an einem Feldhäcksler beschrieben, die mehrere quer zu der Vorwärtsrichtung, in der die Maschine beim Erntebetrieb über ein Feld bewegt wird, angeordnete Mäh- und Einzugseinrichtungen aufweist. Die Mäh- und Einzugseinrichtungen umfassen eine untere Schneidscheibe in der Art eines Kreissägemessers und darüber angeordnete Förderscheiben mit Aussparungen zur Aufnahme von Pflanzen. Die Schneidscheiben werden mit höherer Geschwindigkeit als die Förderscheiben in Drehung versetzt. Die mittels der Schneidscheiben von den im Boden verbleibenden Stoppeln getrennten Pflanzen werden durch die Förderscheiben angenommen und durch die Förderscheiben und in den Zwickelbereichen zwischen den Förderscheiben angeordnete Querfördertrommeln an den Rückseiten der Mähund Einzugseinrichtungen zur Mitte der Maschine transportiert und durch Schrägfördertrommeln an einen Einzugskanal eines Feldhäckslers übergeben.

Um die Pflanzen zur Weitergabe an die nachfolgenden Querfördertrommeln bzw. Förderscheiben aus den Förderscheiben heraus zu heben, sind so genannte Abstreifer vorgesehen, deren Spitzen sich in den vertikalen Zwischenraum zwischen zwei übereinander angeordneten Förderscheiben erstrecken. Die Abstreifer sind in kurzem Abstand stromab der Spitze durch senkrechte Pfosten mit dem Boden der Maschine verbunden. Derartige Abstreifer werden auch als Ausräumer oder Ausnehmer bezeichnet. Weitere Abstreifer sind den Querfördertrommeln und den Schrägfördertrommeln zugeordnet. Sie sind am Abgabeende der Querfördertrommeln und Schrägfördertrommeln durch Pfosten mit dem Boden der Maschine verbunden.

Als nachteilig ist dabei anzusehen, dass sich insbesondere langhalmige, relativ dünne Pflanzen, insbesondere bei der Ernte von Ganzpflanzensilage, an den Pfosten verfangen und zu Verstopfungen der Maschine führen können, da sich Pflanzenteile schließlich an den Spitzen der Abstreifer ansammeln und die ordnungsgemäße Funktion der Abstreifer unterbinden, so dass Pflanzen dann durch die Förderelemente um 360° mitgeführt werden.

Die EP 0 069 898 A beschreibt eine Maschine eingangs genannter Art, die zwei Mäh- und Einzugseinrichtungen mit unteren Schneidscheiben und darüber angeordneten Förderscheiben mit um ihren Umfang verteilten Aussparungen zur Aufnahme von Pflanzen umfasst. Rückwärtig der Mäh- und Einzugseinrichtungen sind S-förmige Abstreifer angeordnet, deren stromauf liegenden Spitzen in den vertikalen Zwischenraum zwischen zwei Förderscheiben eingreifen. An den Rückseiten der Abstreifer wird das Erntegut entlang gefördert. An ihren stromab liegenden Enden der Abstreifer sind an ihren Vorderseiten sich vertikal nach unten erstreckende Pfosten angebracht, die wiederum mit ihren unteren Enden an Getriebegehäusen der Mäh- und Einzugseinrichtungen befestigt sind. Hier ist der Pfosten nur durch die Abstreifer vom Erntegutstrom getrennt, so dass sich auch hier Pflanzen um die Pfosten wickeln können.

Die DE 199 52 566 C beschreibt eine andere Maschine zur Ernte stängelartiger Pflanzen mit übereinander angeordneten Ketten, an denen nach außen ragende Mitnehmer zur Förderung der Pflanzen angebracht sind. Die Ketten umlaufen um vertikale Achsen rotierende Umlenkräder. Unterhalb der Ketten sind Schneidelemente zum Abschneiden der Pflanzen von im Boden verbleibenden Stümpfen angebracht. Am abgabeseitigen Ende sind zwischen übereinander folgenden Ketten als Abstreifer dienende Bleche angeordnet, die durch rückwärtig der Umlenkräder angeordnete Pfosten mit dem Boden der Maschine verbunden sind. Auch hier befinden sich die Pfosten im Gutstrom, so dass sich Pflanzen an ihnen verfangen können.

Die EP 0 508 189 A schlägt eine andere Maschine zur Ernte stängelartiger Pflanzen vor, die ebenfalls rotierende Mäh- und Einzugseinrichtungen mit unteren Schneidscheiben und oberen Förderscheiben umfasst. Den der Längsmittelebene der Maschine benachbarten Mäh- und Einzugseinrichtungen ist jeweils ein einziger Abstreifer zugeordnet, der an einer horizontalen oberen Abdeckung angebracht ist, die stationär an der Mitte der Maschine befestigt ist. Hier ist als nachteilig anzusehen, dass eine stationäre Abdeckung zur Befestigung des Abstreifers erforderlich ist, die nur in der Maschinenmitte realisierbar ist, wenn die äußeren Mäh- und Einzugseinrichtungen das Erntegut auch an ihren Rückseiten fördern sollen.

Schließlich beschreibt die GB 20 12 154 A eine Maschine zur Ernte stängelartiger Pflanzen, die ebenfalls rotierende Mäh- und Einzugseinrichtungen mit unteren Schneidscheiben und oberen Förderscheiben umfasst. Abstreifer sind vor der Drehachse der Mäh- und Einzugseinrichtungen mit seitlichen Wänden eines Halmteilers und am abgabeseitigen Ende an der Rückseite der Mäh- und Einzugseinrichtungen mit dem Boden der Maschine verbunden. Hier sind am abgabeseitigen Ende ebenfalls Probleme durch Erntegut zu erwarten, das sich an der Verbindung zwischen dem rückseitigen Ende der Abstreifer und dem Boden der Maschine ansammelt.

### Aufgabe der Erfindung

Die der Erfindung zu Grunde liegende Aufgabe wird darin gesehen, eine Maschine zur Ernte stängelartiger Pflanzen mit Mäh- und Einzugseinrichtungen und einem diesen zugeordneten Abstreifer bereitzustellen, der an beliebigen Mäh- und Einzugseinrichtungen und anderen Fördertrommeln anbringbar ist und bei dem unerwünschte Ansammlungen von Pflanzen insbesondere bei der Ganzpflanzensilage nicht oder in vermindertem Ausmaß zu erwarten sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Maschine umfasst einen Rahmen und zwei oder mehr (um eine Achse rotierende oder als Endlosförderer um Umlenkräder geführte) Förderelemente mit um den Umfang verteilten Aussparungen zur Aufnahme und Förderung von Pflanzenstängeln. Unterhalb der Förderelemente ist vorzugsweise eine untere Schneidscheibe angeordnet, so dass gemeinsam mit den Förderelementen eine Mäh- und Einzugseinrichtung gebildet wird. In den vertikalen Zwischenraum zwischen unmittelbar übereinander angeordneten Förderelementen greift ein Abstreifer ein, der durch einen sich vertikal erstreckenden, frei stehenden Pfosten direkt oder indirekt mit dem Rahmen verbunden ist. Der Pfosten ist außerhalb des Gutstromes angeordnet. Die das Erntegut aus den Aussparungen der Förderelemente hebende Spitze des Abstreifers befindet sich bezüglich der Vorwärtsrichtung der Maschine rückwärtig der Drehachse der Förderelemente, während der Pfosten vor der Drehachse angeordnet ist.

Auf diese Weise erreicht man, dass der Pfosten relativ weit vom Gutstrom angeordnet ist, so dass sich keine oder nur noch relativ wenige Pflanzenteile, insbesondere Halme von Getreidepflanzen bei der Ganzpflanzensilage, um den Pfosten wickeln können, bzw. dass sich dennoch am Pfosten ansammelnde Pflanzen zumindest nicht die Funktion des Abstreifers beeinträchtigen können. Durch den auf beliebige Weise mit dem Rahmen der Maschine verbundenen Pfosten kann der Abstreifer an beliebigen Positionen der Maschine angebracht werden.

Der Pfosten ist insbesondere in der Nähe der Vorderkante der Maschine angeordnet.

Der Abstreifer kann eine Fläche haben, die dem Umfang der Förderelemente einer zweiten, der Mäh- und Einzugseinrichtung benachbarten, näher zur Längsmittelebene der Maschine angeordneten Mäh- und Einzugseinrichtung zugewandt ist. Wenn diese Fläche die Förderelemente der zweiten Mäh- und Einzugseinrichtung kreisbogenförmig umschließt, kann sie mit diesen Förderelementen zusammenwirken, um eine Führung für die von der zweiten Mäh- und Einzugseinrichtung angeordneten Mäh- und Einzugseinrichtung aufgenommenen Pflanzen herzustellen. Dadurch können oberhalb der ersten Mäh- und Einzugseinrichtung angeordnete Abdeckungen, die bisher diese Aufgabe erfüllt haben, entfallen, oder bei dieser Aufgabe unterstützt werden.

Außerdem kann der Abstreifer eine rückwärtige Fläche aufweisen, die einer Querfördertrommel zugewandt ist, wobei die rückwärtige Fläche und die Querfördertrommel zusammenwirken, um den Erntegutstrom von der Mäh- und Einzugseinrichtung zu der zweiten, stromab liegenden Mäh- und Einzugseinrichtung zu führen und zu fördern.

### Ausführungsbeispiel

In den Zeichnungen sind zwei nachfolgend näher beschriebene Ausführungsbeispiele der Erfindung dargestellt. Es zeigt:
- Fig. 1: eine Draufsicht auf eine erste Ausführungsform einer Maschine zur Ernte stängelartiger Pflanzen,
- Fig. 2: einen Schnitt durch die Maschine entlang der Linie 2-2, und
- Fig. 3: eine Draufsicht auf eine zweite Ausführungsform einer Maschine zur Ernte stängelartiger Pflanzen.

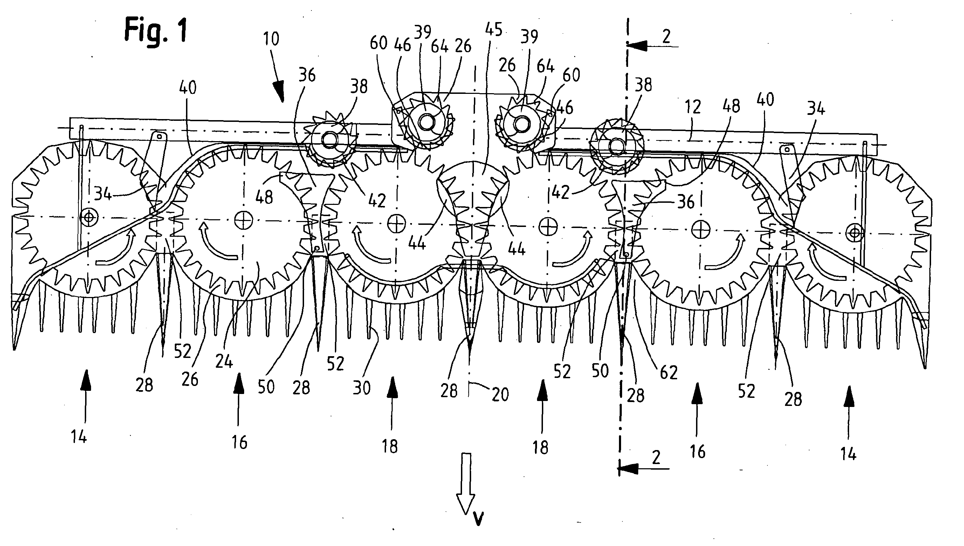

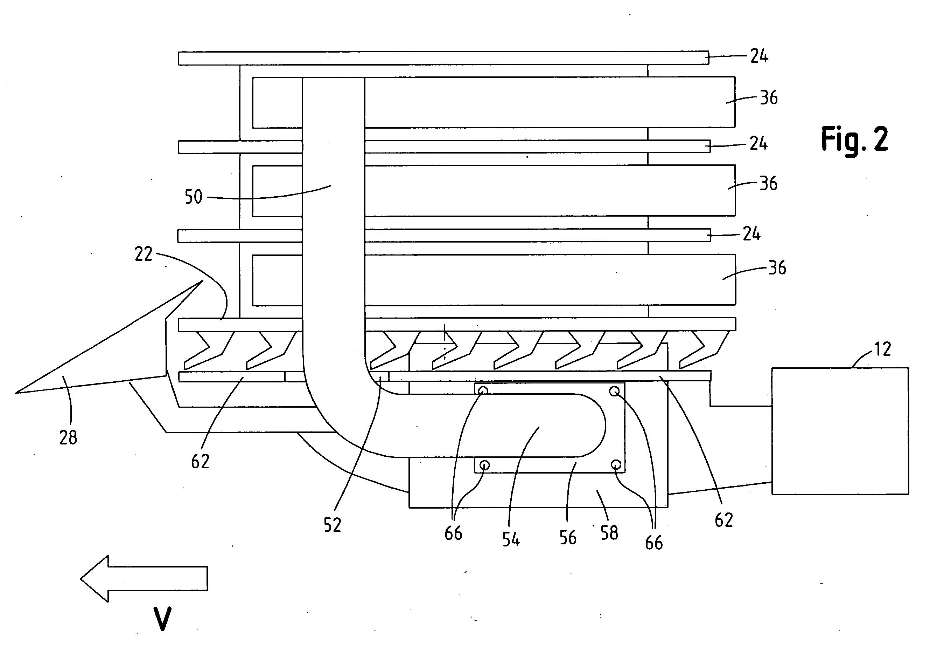

An einem Rahmen 12 einer in der Figur 1 in einer Draufsicht dargestellten Maschine 10 zur Ernte stängelartiger Pflanzen sind beidseits einer Längsmittelebene 20 jeweils drei Mäh- und Einzugseinrichtungen 14, 16, 18 seitlich nebeneinander befestigt. Die Mäh- und Einzugseinrichtungen 14 bis 18 setzen sich jeweils aus einer unteren, in Drehung versetzbaren Schneidscheibe 22 (s. Figur 2) und mehreren koaxial darüber angeordneten, in Drehung versetzbaren Förderelementen 24 zusammen. Die Schneidscheiben 22 sind am Rand mit scharfen Zähnen ausgestattet oder anderweitig geschärft, um die Pflanzenstängel von den im Boden verbleibenden Stoppeln abzutrennen. Die Stängel finden in Ausbuchtungen 26 der Förderelemente 24 Aufnahme und werden wie unten beschrieben in einen die Maschine 10 tragenden und ihre beweglichen Elemente antreibenden und die Maschine 10 in einer Vorwärtsrichtung V über ein Feld bewegenden Feldhäcksler (nicht gezeigt) transportiert. Im Folgenden beziehen sich Richtungsangaben, wie vorn und hinten, auf die Vorwärtsrichtung V.

Zwischen den Mäh- und Einzugseinrichtungen 14 bis 18 befinden sich jeweils Stängelteiler 28, um die Pflanzen seitlich abzulenken und in den Eingriffsbereich der Mäh- und Einzugseinrichtungen 14 bis 18 zu verbringen, wenn erforderlich. An den Vorderseiten der Mäh- und Einzugseinrichtungen 14 bis 18 sind kleinere Stängelteiler 30 angeordnet. Die Arbeitsbreite der Mäh- und Einzugseinrichtungen 14 bis 18 entspricht jeweils einer Reihe, d. h. etwa 0,75 m. Die Maschine 10 kann somit sechs im Abstand von 75 cm gesäte Reihen Mais gleichzeitig ernten. Die Arbeitsbreite der Mäh- und Einzugseinrichtungen 14 bis 18 könnte aber auch kleiner oder größer (z. B. 1,5 m) sein.

Beim Erntebetrieb drehen sich die Mäh- und Einzugseinrichtungen 14 bis 18 in den durch die Pfeile angedeuteten Richtungen. Die der Längsmittelebene 20 benachbarten, inneren Mäh- und Einzugseinrichtungen 18 fördern die Pflanzen somit zunächst nach außen und nach hinten, wie auch die nach außen folgenden Mäh- und Einzugseinrichtungen 16, während die äußeren Mäh- und Einzugseinrichtungen 14 sich gegensinnig dazu drehen. Wie anhand der Figur 1 erkennbar ist, übergeben die äußeren Mäh- und Einzugseinrichtungen 14 ihr Erntegut etwa in der Mitte zwischen den Drehachsen der Mäh- und Einzugseinrichtungen 14, 16 an die mittleren inneren Mäh- und Einzugseinrichtungen 16. Dazu sind Abstreifer 34 vorgesehen, die sich durch Schlitze in rückwärtigen Führungswänden 40 der Maschine 10 erstrecken, die auch die mittleren und inneren Mäh- und Einzugseinrichtungen 16, 18 rückseitig umschließen. Die Abstreifer 34 sind rückwärtig der Führungswände 40 mit der Bodenplatte 62 oder einer Rückwand der Maschine 10 verbunden. Die Abstreifer 34 umfassen in den Zwischenraum zwischen den Förderelementen 24 der äußeren Mäh- und Einzugseinrichtungen 14 eingreifende Spitzen.

An der Rückseite der mittleren Mäh- und Einzugseinrichtungen 16 wird das Erntegut durch weitere Abstreifer 36 aus den Ausbuchtungen 26 herausgehoben und durch Querfördertrommeln 38, die sich durch Schlitze in der Rückwand 40 erstreckende Zähne 42 umfassen, an die inneren Mäh- und Einzugseinrichtungen 18 übergeben. Die Abstreifer 36 erstrecken sich von ihrem eigentlichen Wirkungsbereich an ihren an der Rückseite der Maschine 10 angeordneten Spitzen 48, wo sie die Pflanzen aus den Förderelementen 24 der mittleren Mäh- und Einzugseinrichtungen 18 herausheben, bis zu einem Pfosten 50 in der Nähe oder an der Vorderkante der Maschine 10, der sich in der Nachbarschaft des Anbringungspunktes eines Stängelteilers 28 befindet.

Die Abstreifer 36 sind in der Draufsicht (Figur 1) etwa dreieckig und haben eine dem Umfang der Förderelemente 24 der mittleren Mäh- und Einzugseinrichtung 16 folgende Seitenfläche und eine sich quer zur Fahrtrichtung erstreckende rückwärtige Fläche, die dazu dient, eine vordere Begrenzung des Förderwegs der Pflanzen von der mittleren Mäh- und Einzugseinrichtung 16 zur Querfördertrommel 38 und bis zur nächst inneren Mäh- und Einzugseinrichtung 18 zu definieren. Diese rückwärtige Fläche und die Querfördertrommel 38 wirken zusammen, um den Erntegutstrom von der mittleren Mäh- und Einzugseinrichtung 16 bis zur nächst inneren Mäh- und Einzugseinrichtung 18 zu führen und zu fördern. Die dritte, der inneren Mäh- und Einzugseinrichtung 18 zugewandte Seite der Abstreifer 36 folgt dem Umfang der Förderelemente 24 der inneren Mäh- und Einzugseinrichtung 18 und wirkt mit ihnen zusammen, um eine Führung für die von der inneren Mäh- und Einzugseinrichtung 18 aufgenommenen Pflanzen herzustellen.

An ihren vorderen Enden sind die Abstreifer 36 durch vertikale Pfosten 50 mit einer Bodenplatte 62 der Maschine 10 verbunden. Außer an den Pfosten 50 sind die einzelnen Abstreiferbleche der Abstreifer 36 in vertikaler Richtung nicht untereinander verbunden, damit sich eventuell ansammelndes Erntegut durch nachfolgendes Erntegut wieder mitgenommen werden kann. Die Abstreifer 36 können in sich flache Bleche sein oder einen U-förmigen Querschnitt aufweisen, wie in der DE 102 58 013 A dargestellt.

An der Rückseite der inneren Mäh- und Einzugseinrichtungen 18 wird das Erntegut durch weitere Abstreifer 44, die an einer mittleren Abdeckung 45 befestigt sind, aus den Ausbuchtungen 26 herausgehoben und an Fördertrommeln 39 übergeben, die um leicht nach vorn geneigte Achsen rotierende Förderelemente 64 mit Aussparungen 26 umfassen und den Höhenunterschied zwischen dem Boden der Maschine 10 und den nachfolgenden Einzugswalzen des Einzugskanals des Feldhäckslers überwinden. Anstelle der Abstreifer 44 könnten auch Abstreifer 36 der mittleren Mäh- und Einzugseinrichtungen 16 treten.

Den Fördertrommeln 39 sind ebenfalls bogenförmige Abstreifer 46 zugeordnet, die vor den (und stromauf der) Fördertrommeln 39 und rückwärtig des Gutstroms (sogar rückwärtig der Drehachsen der Fördertrommeln 39) durch vertikale Pfosten 60 am Rahmen 12 befestigt sind, die analog den Pfosten 50 gestaltet sind. Derartige Abstreifer 46 könnten auch den Querfördertrommeln 38 zugeordnet werden.

Die Figur 2 zeigt einen Schnitt durch die Maschine 10 entlang der Linie 2-2 der Figur 1. Der Pfosten 50 erstreckt sich in vertikaler Richtung durch eine etwa rechteckige Öffnung 52 in einer mit dem Rahmen 12 verbundenen Bodenplatte 62 und weist an seinem unteren Ende einen horizontal verlaufenden, sich entgegen der Vorwärtsrichtung V nach hinten erstreckenden Abschnitt 54 auf, an dessen rückwärtigen Ende ein Flansch 56 angeschweißt ist. Der Flansch 56 ist durch zwei U-förmige Bügel, die sich durch Bohrungen 66 im Flansch 56 erstrecken, an einem Getriebegehäuse 58 befestigt oder direkt durch Schrauben, die sich in Gewindelöcher im Getriebegehäuse 58 erstrecken, damit verbunden. Das Teile des Antriebsstrangs für die Förderelemente 24 und Schneidscheiben 24 der inneren Einzugs- und Mäheinrichtung 18 enthaltende Getriebegehäuse 58 ist wiederum mit dem Rahmen 12 verschraubt. Der Pfosten 50 könnte alternativ oder zusätzlich am Getriebegehäuse der mittleren Mäh- und Einzugseinrichtung 16 befestigt werden. Die Abstreifer 36 sind mit dem Pfosten 50 verschweißt oder auf beliebige andere Weise daran befestigt, z. B. angeschraubt oder auf ein nicht kreisförmiges Profil aufgesteckt.

Öffnungen 52 sind auch vor den Abstreifern 34 der äußeren Mäh- und Einzugseinrichtungen 14 angeordnet. Sie ermöglichen, dass sich im Bereich der Abstreifer 34 und 36 ansammelnde Pflanzenteile nach unten auf das Feld fallen, so dass größere Ansammlungen von Pflanzenteilen und dadurch bedingte Gutstaus vermieden werden.

Da die Befestigungselemente der Abstreifer, d. h. die Pfosten 50, relativ weit von den mit den Pflanzen zusammenwirkenden Spitzen 48 der Abstreifer 36 angeordnet sind, ist nicht mehr zu erwarten, dass sich Pflanzenteile an den Pfosten 50 oder 60 verfangen oder dass sich zumindest nicht so viele Pflanzen ansammeln, dass die Funktion der Abstreifer 36 beeinträchtigt wird. Die Funktionsweise der erfindungsgemäßen Maschine 10 ist demnach verbessert.

Bei einer Maschine 10 mit einer größeren Anzahl an Mäh- und Einzugseinrichtungen 14 bis 18 können weitere Mäh- und Einzugseinrichtungen (nicht gezeigt) zwischen den äußeren Mäh- und Einzugseinrichtungen 14 und den mittleren Mäh- und Einzugseinrichtungen 16 eingefügt werden, deren Drehrichtung (wie in der DE 195 31 918 A) der Drehrichtung der mittleren Mäh- und Einzugseinrichtungen 16 entspricht und deren Abstreifer mit den Abstreifern 36 gleichartig sind.

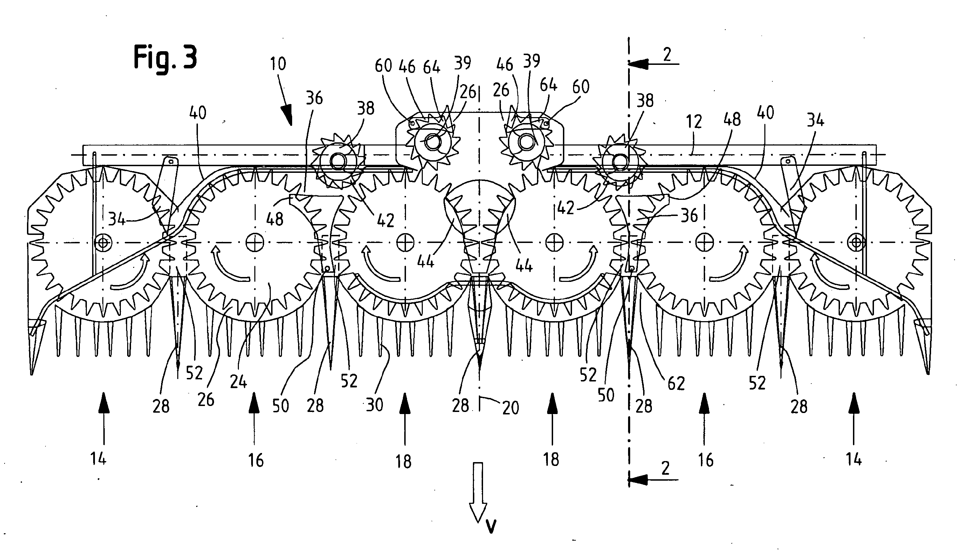

Bei der in Figur 3 dargestellten, zweiten Ausführungsform einer Maschine 10 sind mit der ersten Ausführungsform übereinstimmende Elemente mit übereinstimmenden Bezugszeichen gekennzeichnet. Unterschiedlich ist jedoch die Anbringung der Abstreifer 46 der Fördertrommeln 39, die sich hier vollständig rückwärtig der Fördertrommeln 39 befinden und durch Pfosten 60 an den äußeren und rückwärtigen Seiten der Fördertrommeln 39 am Rahmen 12 befestigt sind. Auch die Abstreifer 46 nach Figur 3 könnten den Querfördertrommeln 38 zugeordnet werden.

## Patentansprüche

1. Maschine (10) zur Ernte stängelartiger Pflanzen mit einem Rahmen (12), zwei am Rahmen abgestützten, übereinander angeordneten Förderelementen (24) mit um ihren Umfang verteilten Aussparungen (26) zur Aufnahme und Förderung eines Pflanzenstängel umfassenden Gutstroms und einem Abstreifer (36), der sich in den Zwischenraum zwischen den , Förderelementen (24) erstreckt, um die Pflanzenstängel aus den Aussparungen (26) heraus zu bewegen, wobei der Abstreifer (36) durch einen außerhalb des von den Förderelementen (24) geförderten Gutstroms angeordneten, sich vertikal erstreckenden, freistehenden Pfosten (50) mit dem Rahmen (12) verbunden ist und eine mit den Förderelementen (24) zusammenwirkende Spitze (48) des Abstreifers (36) bezüglich einer Vorwärtsrichtung (V) der Maschine (10) rückwärtig einer Drehachse der Förderelemente (24) liegt, **dadurch gekennzeichnet, dass** der Pfosten (50) bezüglich der Vorwärtsrichtung (V) der Maschine (10) vor der Drehachse der Förderelemente (24) angeordnet ist.

2. Maschine (10) nach Anspruch 1, **dadurch gekennzeichnet, dass** der Pfosten (50) bezüglich der Drehrichtung der Förderelemente (24) stromab des Abstreifers (36) angeordnet ist.

3. Maschine (10) nach einem der Ansprüche 1 oder 2, **dadurch gekennzeichnet, dass** die Förderelemente (24) mit einer darunter angeordneten Schneidscheibe (22) eine Mäh- und Einzugseinrichtung (16) bilden.

4. Maschine (10) nach Anspruch 3, **dadurch gekennzeichnet, dass** der Abstreifer (34) eine seitliche Fläche aufweist, die dem Umfang der Förderelemente (24) einer anderen, der Mäh- und Einzugseinrichtung (16) benachbarten, näher zur Längsmittelebene (20) der Maschine (10) angeordneten Mäh- und Einzugseinrichtung (18) folgt und mit diesen Förderelementen (24) zusammenwirkt, um eine Führung für die von der anderen Mäh- und Einzugseinrichtung (18) aufgenommenen Pflanzen herzustellen.

5. Maschine (10) nach Anspruch 3 oder 4, **dadurch gekennzeichnet, dass** der Abstreifer (34) eine rückwärtige Fläche aufweist, die einer Querfördertrommel (38) zugewandt ist, wobei die rückwärtige Fläche und die Querfördertrommel (38) zusammenwirken, um den Erntegutstrom zwischen sich von der Mäh- und Einzugseinrichtung (16) zu einer stromab liegenden Mäh- und Einzugseinrichtung (18) zu führen und zu fördern.

6. Maschine (10) nach einem der Ansprüche 1 bis 5, **dadurch gekennzeichnet, dass** mehrere Abstreifer (36, 46) übereinander angeordnet und nur durch den Pfosten (50) untereinander verbunden sind.

7. Maschine (10) nach einem der vorhergehenden Ansprüche, **dadurch gekennzeichnet, dass** der Pfosten (50) sich durch eine Öffnung (52) in einer Bodenplatte (62) erstreckt und unterhalb der Bodenplatte (62) mit dem Rahmen (12) verbunden ist.

8. Maschine (10) nach Anspruch 7, wenn rückbezogen auf einen der Ansprüche 3 bis 6, **dadurch gekennzeichnet, dass** der Pfosten (50) über ein Getriebegehäuse (56) einer Einzugs- und Mäheinrichtung (18) mit dem Rahmen (12) verbunden ist.

## Claims

1. Machine (10) for harvesting stalk-like plants, having a frame (12), two conveying elements (24) which are arranged one above the other, are supported on the frame and have recesses (26) distributed around their periphery for accommodating and conveying a stream of material comprising plant stalks, and having a stripper (36) which extends into the gap between the conveying elements (24) in order to move the plant stalks out of the recesses (26), wherein the stripper (36) is connected to the frame (12) by a vertically extending, free-standing post (50) arranged outside the stream of material conveyed by the conveying elements (24), and a tip (48) of the stripper (36), said tip (48) interacting with the conveying elements (24), is located to the rear of a rotational axis of the conveying elements (24) with regard to a forward direction (V) of the machine (10), **characterized in that** the post (50) is arranged in front of the rotational axis of the conveying elements (24) with regard to the forward direction (V) of the machine (10).

2. Machine (10) according to Claim 1, **characterized in that** the post (50) is arranged downstream of the stripper (36) with regard to the direction of rotation of the conveying elements (24).

3. Machine (10) according to either of Claims 1 and 2, **characterized in that** the conveying elements (24) form a mowing and gathering device (16) together with a cutting disc (22) arranged underneath them.

4. Machine (10) according to Claim 3, **characterized in that** the stripper (36) has a lateral face which follows the circumference of the conveying elements (24) of another mowing and gathering device (18) adjacent to the mowing and gathering device (16) and arranged closer to the longitudinal mid-plane (20) of the machine (10), and interacts with these conveying elements (24) in order to produce a guide for the plants picked up by the other mowing and gathering device (18).

5. Machine (10) according to Claim 3 or 4, **characterized in that** the stripper (36) has a rear face which faces a transverse conveying drum (38), wherein the rear face and the transverse conveying drum (38) interact in order to guide and convey the stream of harvested material between one another from the mowing and gathering device (16) to a downstream mowing and gathering device (18).

6. Machine (10) according to one of Claims 1 to 5, **characterized in that** a plurality of strippers (36, 46) are arranged one above another and are connected together only by the post (50).

7. Machine (10) according to one of the preceding claims, **characterized in that** the post (50) extends through an opening (52) in a base plate (62) and is connected to the frame (12) underneath the base plate (62).

8. Machine (10) according to Claim 7, when referring back to one of Claims 3 to 6, **characterized in that** the post (50) is connected to the frame (12) via a gear mechanism housing (56) of a gathering and mowing device (18).

## Revendications

1. Machine (10) de récolte de plantes à tiges, comprenant un cadre (12), deux éléments de transport (24) disposés l'un au-dessus de l'autre et supportés sur le cadre, dotés d'évidements (26) répartis sur leur périphérie pour recevoir et transporter un flux de produit contenant des tiges de plantes, et comprenant un dispositif de raclage (36) qui s'étend dans l'espace intermédiaire entre les éléments de transport (24) afin de déplacer les tiges de plantes hors des évidements (26), le dispositif de raclage (36) étant relié au cadre (12) au moyen d'un montant (50) autoporteur qui s'étend verticalement et qui est disposé à l'extérieur du flux de produit transporté par les éléments de transport (24), et une pointe (48) du dispositif de raclage (36) qui coopère avec les éléments de transport (24) se situe, par rapport à une direction d'avance (V) de la machine (10), à l'arrière d'un axe de rotation des éléments de transport (24), **caractérisée en ce que** le montant (50) est disposé, par rapport à la direction d'avance (V) de la machine (10), devant l'axe de rotation des éléments de transport (24).

2. Machine (10) selon la revendication 1, **caractérisée en ce que** le montant (50) est disposé, par rapport au sens de rotation des éléments de transport (24), en aval du dispositif de raclage (36).

3. Machine (10) selon la revendication 1 ou 2, **caractérisée en ce que** les éléments de transport (24) forment, conjointement avec un disque de coupe (22) disposé sous ces derniers, un dispositif de fauche et d'amenée (16).

4. Machine (10) selon la revendication 3, **caractérisée en ce que** le dispositif de raclage (36) comporte une surface latérale qui suit la périphérie des éléments de transport (24) d'un autre dispositif de fauche et d'amenée (18) disposé plus près du plan longitudinal médian (20) de la machine (10) et adjacent au dispositif de fauche et d'amenée (16), et qui coopère avec ces éléments de transport (24) afin de réaliser un guidage pour les plantes reçues par l'autre dispositif de fauche et d'amenée (18).

5. Machine (10) selon la revendication 3 ou 4, **caractérisée en ce que** le dispositif de raclage (36) comporte une surface arrière qui fait face à un tambour de transport transversal (38), la surface arrière et le tambour de transport transversal (38) coopérant afin de guider et de transporter le flux de produit de récolte entre eux depuis le dispositif de fauche et d'amenée (16) jusqu'à un dispositif de fauche et d'amenée (18) situé en aval.

6. Machine (10) selon l'une quelconque des revendications 1 à 5, **caractérisée en ce que** plusieurs dispositifs de raclage (36, 46) sont disposés les uns sur les autres et ne sont reliés les uns aux autres qu'au moyen du montant (50).

7. Machine (10) selon l'une quelconque des revendications précédentes, **caractérisée en ce que** le montant (50) s'étend à travers une ouverture (52) dans une plaque de fond (62) et est relié au cadre (12) en dessous de la plaque de fond (62).

8. Machine (10) selon la revendication 7, lorsqu'elle se rapporte à l'une quelconque des revendications 3 à 6, **caractérisée en ce que** le montant (50) est relié au cadre (12) par l'intermédiaire d'un boîtier de transmission (56) d'un dispositif de fauche et d'amenée (18).
